# EUROPEAN PATENT APPLICATION

(11) **EP 2 624 329 A1**
(43) Date of publication of application: **07.08.2013**
(21) Application number: 13151991.0
(22) Date of filing: 21.01.2013
(51) Int. Cl.: H01M 2/04, H01M 2/06, H01M 2/30, H01M 2/32, H01M 10/04, H01M 2/26, H01M 10/0525

(54) **Rechargeable battery**

(30) Priority: 01.02.2012 US 201261593539 P; 17.01.2013 US 201313743413
(71) Applicant: Samsung SDI Co., Ltd., Gyeonggi-do 449-577 (KR); Robert Bosch GmbH, 70442 Stuttgart (DE)
(72) Inventor: Kim, Duk Jung, Yongin-si (KR)
(74) Representative: Gulde Hengelhaupt Ziebig & Schneider

(57) **Abstract**

A rechargeable battery according to one aspect of the present invention includes an electrode assembly having a first electrode and a second electrode, a case in which the electron assembly is installed, a cap plate coupled to the case, a first terminal electrically connected to the first electrode and protruding to the external side of the cap plate, and an insulation member having an insulation portion provided between the first terminal and the cap plate for insulation there between and an electron donating portion inserted into the insulation portion and contacting the first terminal.

## Description

### Related Applications

This application claims priority to and the benefit of US Patent Application No. 61/593,539 filed in the USPTO on February 1, 2012, the entire contents of which are incorporated herein by reference.

### BACKGROUND

### 1. Field

The described technology relates generally to a rechargeable battery. More particularly, the described technology relates generally to a rechargeable battery having an improved insulation member.

### 2. Description of the Related Art

A rechargeable battery can be repeatedly charged and discharged, unlike a primary battery that cannot be recharged. A low-capacity rechargeable battery is used for a small portable electronic device such as a mobile phone, a laptop computer, and a camcorder. A large-capacity rechargeable battery is widely used as a power supply for driving a motor of a hybrid vehicle and the like.

Recently, a high power rechargeable battery using a non-aqueous electrolyte having high energy density has been developed and the high power rechargeable battery is configured by a large-capacity battery module by connecting a plurality of rechargeable batteries in series so as to be used for devices required for large power, for example, a motor drive of an electric vehicle and the like.

Further, one battery module is configured by a plurality of rechargeable batteries which are generally connected to each other in series and the rechargeable battery may be formed in a cylindrical shape, a square shape, or the like.

When the case of the rechargeable battery is positively charged, electrons are separated from the negative terminal, thereby causing corrosion of the negative terminal. When the negative terminal is corroded, contact resistance between the negative terminal and a member connected to the negative terminal is increased so that the performance of the rechargeable battery is deteriorated.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery that can prevent corrosion of a negative terminal.

A rechargeable battery according to one aspect of the present invention includes an electrode assembly having a first electrode and a second electrode, a case in which the electrode assembly is installed, a cap plate coupled to the case, a first terminal electrically connected to the first electrode and protruding to the external side of the cap plate, and an insulation member having an insulation portion provided between the first terminal and the cap plate for insulation therebetween and an electron donating portion inserted into the insulation portion and contacting the first terminal.

According to the exemplary embodiment, reactivity of the material of the electron donating portion is higher than that of the material of the negative terminal and therefore the electron donating portion provides electrons to the negative terminal to prevent oxidization of the negative terminal.

A rechargeable battery according to another aspect of the present invention includes an electrode assembly having a first electrode and a second electrode, a case in which the electrode assembly is installed, a cap plate coupled to the case, a first terminal electrically connected to the first electrode and protruding to the external side of the cap plate, an insulation member having an insulation portion which is arranged between the first terminal and the cap plate and adapted to electrically insulate the first terminal from the cap plate, a second terminal electrically connected to the second electrode and protruding to the external side of the cap plate, wherein an electron donating portion is electrically connected to the first terminal and the second terminal is electrically connected to the cap plate.

Preferably the electron donating portion is at least partly arranged between the insulation portion and the first terminal. More preferably, the complete electron donating portion is arranged between the insulation portion and the first terminal.

Preferably the first terminal is electrically connected to the first electrode through a first terminal connection member and a first current collecting tab and the second terminal is electrically connected to the second electrode through a second terminal connection member and a second current collecting tab.

Preferably the first terminal connection member directly contacts the first terminal. Preferably the first terminal connection member includes a column portion, a lower flange, and a lower protrusion, wherein column portion contacts the first terminal. More preferably, the first terminal comprises a hole, and the column portion of the first terminal connection member protrudes through the hole, and the complete circumference of the column portion directly contacts the inner surface of the hole of the first terminal.

Preferably the material of the first terminal connection member (which is in direct contact to the first terminal) is the same as the material of the first terminal. Alternatively, the material of the first terminal connection member (which is in direct contact to the first terminal) is different from the material of the first terminal. In this case it is preferred that an absolute value of a difference between the standard electrode potential of the material of the first terminal and the standard electrode potential of the material of the first terminal connection member (which is in direct contact to the first terminal) is less than 1V, more preferably less than 0.6V, still more preferably less than 0.4V, still more preferably less than 0.3V and still more preferably less than 0.2V.

Preferably the second terminal connection member directly contacts the second terminal. Preferably the second terminal connection member includes a column portion, a lower flange, and a lower protrusion, wherein column portion contacts the second terminal. More preferably, the second terminal comprises a hole, and the column portion of the second terminal connection member protrudes through the hole, and the complete circumference of the column portion directly contacts the inner surface of the hole of the second terminal.

Preferably the electron donating portion directly contacts the first terminal.

Preferably the energy which is necessary to ionize outermost electrons of the material of the electron donating portion is smaller than the energy which is necessary to ionize outermost electrons of the material of the first terminal.

Preferably the standard electrode potential of the material of the electron donating portion is higher than the standard electrode potential of the material of the first terminal. In order to prevent a quick oxidization of the electron donating portion, the difference between the standard electrode potential of the negative terminal and the standard electrode potential of the electron donating portion should be relatively small. Preferably a difference between the standard electrode potential of the negative terminal and the standard electrode potential of the electron donating portion should preferably be less than 1V, more preferably less than 0.8V, still more preferably less than 0.6V, still more preferably less than 0.5V and still more preferably less than 0.4V.

Preferably the first terminal is a negative terminal and the second terminal is a positive terminal. That is, preferably, the first terminal is connected to a negative electrode (cathode) of the rechargeable battery, more preferably through the first terminal connection member and the first current collecting tab; and the second terminal is connected to a positive electrode (anode) of the rechargeable battery, more preferably through the second terminal connection member and the second current collecting tab.

Preferably a surface area of a lower portion of the first terminal which directly contacts the electron donating portion amounts to at least 10%, more preferably at least 20%, still more preferably at least 30%, still more preferably at least 40%, still more preferably at least 50%, still more preferably at least 60%, still more preferably at least 70%, still more preferably at least 80%, still more preferably at least 90% of a total surface area of a lower portion of the first terminal. Preferably a surface area of a lower portion of the first terminal which directly contacts the electron donating portion amounts to 100% of a total surface area of a lower portion of the first terminal.

Preferably a surface area of a side portion of the first terminal which directly contacts the electron donating portion amounts to at least 10%, more preferably at least 20%, still more preferably at least 30%, still more preferably at least 40% and still more preferably at least 50% of a total surface area of a side portion of the first terminal.

Preferably the electron donating portion is formed in the shape of a (preferably quadrangle) plate. Preferably the thickness of the plate is uniform. Preferably the thickness of the electron donating portion is lower than a thickness of the first terminal. Preferably a ration of a thickness of the electron donating portion and a thickness of the insulation member ranges between 0.5 and 2, more preferably between 0.8 and 1.25. Preferably a thickness of the electron donating portion is equal to a thickness of the insulation member. Preferably the electron donating portion comprises a hole.

Preferably the insulation portion comprises a bottom plate. Preferably the insulation portion comprises at least one side wall extending from a peripheral side of the bottom plate. Preferably the insulation portion comprises a hole which is arranged in a central portion of the bottom plate. Preferably the terminal connection member is inserted in the hole of the insulation portion.

Preferably the electron donating portion comprises an alloy which comprises magnesium. Preferably the electron donating portion consists of an alloy which comprises magnesium.

Preferably an outer side portion of the electron donating portion directly contacts an inner side portion of the insulation portion. Preferably the total peripheral side portion of the electron donating portion directly contacts the inner side portion of the insulation portion. Preferably a surface area of the bottom plate is equal to a surface area of a lower portion of the electron donating portion.

Preferably the first terminal comprises aluminum and the electron donating portion comprises a material selected from the group of magnesium, potassium, calcium and sodium. More preferably, the first terminal comprises aluminum and the electron donating portion comprises an alloy which comprises at least one material selected from the group of magnesium, potassium, calcium and sodium. Still more preferably, the first terminal consists of aluminum and the electron donating portion consists of an alloy which comprises at least one material selected from the group of magnesium, potassium, calcium and sodium.

Preferably the first terminal comprises copper and the electron donating portion comprises a material selected from the group of aluminum, zinc, iron, nickel, tin, lead, magnesium, potassium, calcium and sodium. More preferably, the first terminal comprises copper and the electron donating portion comprises an alloy which comprises at least one material selected from the group of aluminum, zinc, iron, nickel, tin, lead, magnesium, potassium, calcium and sodium. Still more preferably, first terminal consists of copper and the electron donating portion consists of an alloy which comprises at least one material selected from the group of aluminum, zinc, iron, nickel, tin, lead, magnesium, potassium, calcium and sodium.

A vehicle according to an aspect of the present invention includes rechargeable battery comprising at least one of the above-mentioned features.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3 is an exploded perspective view of an insulation member of a rechargeable battery according to a second exemplary embodiment of the present invention.
FIG. 4 is a cut-away perspective view of a part of the rechargeable battery according to the second exemplary embodiment of the present invention.
FIG. 5 is an exploded perspective view of an insulation member of a rechargeable battery according to a third exemplary embodiment of the present invention.
FIG. 6 is a cut-away perspective view of a part of a rechargeable battery according to a fourth exemplary embodiment of the present invention.
FIG. 7 is an exploded perspective view of an insulation member of the insulation member of the rechargeable battery according to the third exemplary embodiment of the present invention.
FIG. 8 is a cur-away perspective view of a part of the rechargeable battery according to the third exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. Like reference numerals designate like elements in the specification and the drawings.

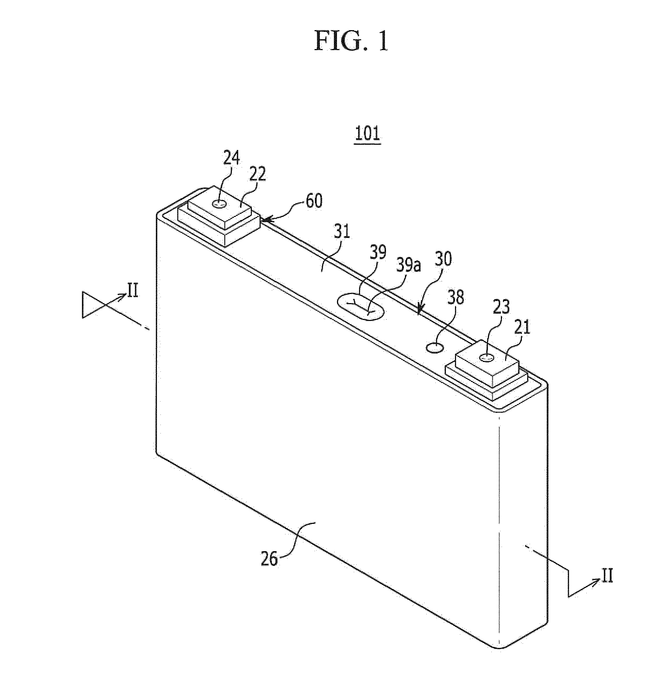

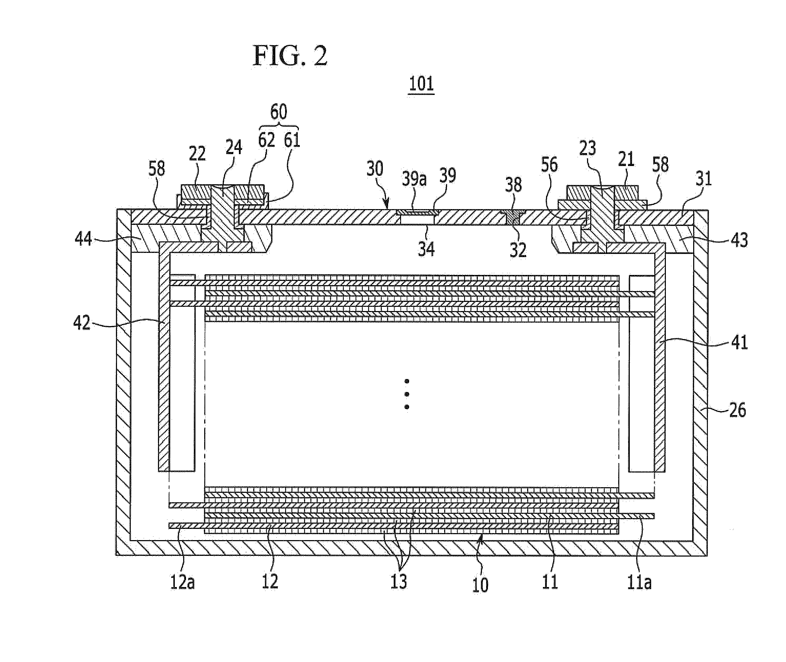

FIG. 1 is a perspective view of a rechargeable battery according to a first exemplary embodiment of the present invention and FIG. 2 is a cross-sectional view of FIG. 1, taken along the line II-I

Referring to FIG. 1 and FIG. 2, a rechargeable battery 101 according to the first exemplary embodiment includes an electrode assembly 10 formed by winding a positive electrode 11 and a negative electrode 12, interposing a separator 13 therebetween, a case 26 in which the electrode assembly 10 is installed, and a cap assembly 30 coupled to an opening of the case 26.

The rechargeable battery 101 according to the first exemplary embodiment is exemplarily illustrated as a lithium ion rechargeable battery formed in the shape of a prism. However, the present invention is not limited thereto, and the present invention may be applied to a lithium polymer battery, a cylindrical battery, or the like.

The positive electrode 11 and the negative electrode 12 include coated regions where an active material is coated to a current collector formed of a thin metal foil and uncoated regions 11a and 12a where the active material is not coated. The positive electrode uncoated region 11 a is formed at a first side end of the positive electrode 11 along a length direction of the positive electrode 11, and the negative uncoated region 12a is formed at a second side end of the negative electrode 12 along a length direction of the negative electrode 12. The positive electrode 11 and the negative electrode 12 are spirally wound, interposing the separator 13 therebetween. Here, the separator 13 is an insulator.

However, the present invention is not limited thereto, and the electrode assembly 10 may have a structure where a positive electrode and a negative electrode, each formed of a plurality of sheets are alternately layered, interposing a separator there between.

The case 26 is approximately formed in the shape of a cuboid, and an opening is formed one side thereof. The case 26 may be formed of metal such as aluminum and stainless steel.

The cap assembly 30 includes a cap plate 31 covering the opening of the case 26, a positive terminal 21 protruding toward an outer side of the cap plate 31 and electrically connected with the positive electrode 11, and a negative terminal 22 protruding toward an outer side of the cap plate 31 and electrically connected to the negative electrode 12.

The cap plate 31 is formed of a long plate extended in one direction, and is coupled to the opening of the case 26. The cap plate 31 is provided with a sealing cap 38 and a vent plate 39. The sealing cap 38 is installed in an electrolyte injection opening 32 and the vent plate 39 has a notch 39a formed to be broken according to a predetermined internal pressure in a vent hole 34.

The positive terminal 21 and the negative terminal 22 protrude to an upward direction of the cap plate 31. The positive terminal 21 is electrically connected to the positive electrode 11 through a current collecting tab 41 and the negative terminal 22 is electrically connected to the negative electrode 12 through a current collecting tab 42.

A terminal connection member 23 electrically connecting the positive terminal 21 and the current collecting tab 41 is provided between the positive terminal 21 and the current collecting tab 41. The positive terminal 21 and the terminal connection member 23 are formed of aluminum, which is the same material of the positive current collector.

The terminal connection member 23 is inserted to a hole formed in the positive terminal 21 and thus an upper end thereof is fixed to the positive terminal 21 by welding and a lower end thereof is fixed to the current collecting tab 41 by welding.

A gasket 56 is inserted to a hole through which the terminal connection member 23 penetrates between the terminal connection member 23 and the cap plate 31 for sealing therebetween, and a lower insulation member 43 to which a lower portion of the terminal connection member 23 is inserted is provided under the cap plate 31.

A connection plate 55 that electrically connects the positive terminal 21 and the cap plate 31 is provided in the positive terminal 21. The terminal connection member 23 is inserted into the connection plate 55 and the connection plate 55 is approximately formed in the shape of a rectangular plate. Accordingly, the cap plate 31 and the case 26 are charged with the positive electrode 11.

A terminal connection member 24 is provided between the negative terminal 22 and the current collecting tab 42 for electrical connection therebetween. The terminal connection member 24 is inserted to a hole formed in the negative terminal 22 and thus an upper end thereof is fixed to the negative terminal 22 by welding and a lower end thereof is fixed to the current collecting tab 42 by welding. The negative terminal 22 may be formed of aluminum, but the terminal connection member 24 may be formed of cooper, which is the same material of a negative electrode current collector.

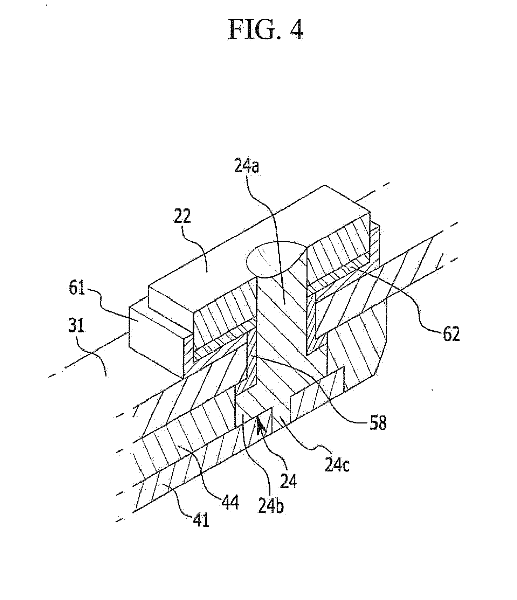

As shown in FIG. 4, the terminal connection member 24 includes a column portion 24a, a lower flange 24b, and a lower protrusion 24c. The column portion 24a penetrates the cap plate 31 and an upper end thereof contacts the negative terminal 22 and is thus fixed thereto, the lower flange 24b protrudes to the outside from a lower end of the column portion 24a, and the lower protrusion 24c protrudes downward from the lower end of the column portion 24a, inserted to the current collecting tab 42, and then fixed thereto by welding. A gasket 58 is provided between the terminal connection member 24 and the cap plate 31 for sealing there between, and a lower insulation member 44 is provided under the cap plate 31 for insulation of the negative terminal 22 and the current collecting tab 42 from the cap plate 31.

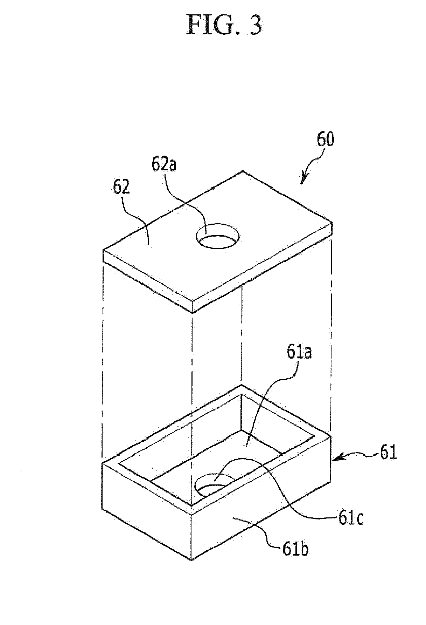

FIG. 3 is an exploded perspective view of an insulation member of the rechargeable battery according to the first exemplary embodiment of the present invention, and FIG. 4 is a cut-away perspective view of a part of the rechargeable battery according to the first exemplary embodiment of the present invention.

Referring to FIG. 3 and FIG. 4, an insulation member 60 is provided between the negative terminal 22 and the cap plate 31 for insulation there between. The insulation member 60 includes an insulation portion 61 for insulation between the negative terminal 22 and the cap plate 31 and an electron donating portion 62 contacting the negative terminal 22.

The insulation portion 61 includes a bottom plate 61 a and a side wall 61 b extended to an upper portion thereof from a side end of the bottom plate 61a. The bottom plate 61a is approximately formed in the shape of a quadrangle plate, and the side wall 61 b is extended to an upper portion thereof from four side ends of the bottom plate 61 a. In the bottom plate 61 a, a hole 61 c to which the terminal connection member 24 is inserted in formed. With such a structure, the insulation portion 61 is formed in the shape of a cuboid having an opened upper portion.

The negative terminal 22 is inserted to the insulation member 60 through the opened upper portion of the insulation member 60 and thus contacts the electron donating portion 62.

The electron donating portion 62 is formed in the shape of a quadrangle plate as a member for providing electrons to the negative terminal 22, and a hole 62a to which the terminal connection member 24 is inserted is formed in the center of the electron donating portion 62. The electron donating portion 62 is provided between the bottom plate 61 a and the bottom side of the negative terminal 22 and thus contacts the negative terminal 22. The electron donating portion 62 is attached to the bottom of the insulation portion 61 and thus provided between the bottom side of the negative terminal 22 and the bottom plate 61 a.

The electron donating portion 62 is formed of a material having stronger reactivity than the material of the negative terminal 22. When the cap plate 31 and the case 26 are positively charged, electrons of the negative terminal 22 move to the cap plate 31, and thus the negative terminal 22 is oxidized. When oxidation and corrosion occurred in the negative terminal 22, contact resistance between the negative terminal 22 and other member contacting the negative terminal 22 is increased so that performance of the rechargeable battery may be deteriorated.

Since the electron donating portion 62 may be formed of a material having higher ionization tendency than the material of the negative terminal 22 such that electrons are provided to the negative terminal 22 from the electron donating portion 62, the electron donating portion 62 may be used to prevent oxidation and corrosion occurred in the negative terminal 22.

Specifically, since the electrons which are provided to negative terminal 22 from the electron donating portion moves to the cap plate 31 which is positively charged, the number of the electrons in the negative terminal 22 are not decreased, and thus the corrosion in the negative terminal by the decrease of the number of the electrons in the negative terminal 22 may be prevented.

As explained above, the electron donating portion 62 should be formed of the material having higher ionization tendency than the material of the negative terminal 22 to prevent the corrosion in the negative terminal 22. Accordingly, the electron donating portion 62 may be formed of a material having few valence electrons than the material of the negative terminal 22 and having more electron shells than the material of the negative terminal 22.

If the material formed of the electron donating portion 62 having few valence electrons than the material of the negative terminal 22 and having more electron shells than the material of the negative terminal 22, because an energy to ionize outermost electrons of the electron donating portion 62 is smaller than an energy to ionize outermost electrons of the negative terminal 22, the outermost electrons of the electron donating portion 62 may easily move to the negative terminal 22.

When the negative terminal 22 is formed of aluminum, the electron donating portion 62 may be formed of a material having higher reactivity than the material of the negative terminal 22. The material includes magnesium and sodium.

However, if the insulation member 60 having the electron donating portion 62 is provided as in the present exemplary embodiment, the electrons may move to the negative terminal 22 from the electron donating portion 62, and thus the number of electrons of the negative terminal 22 is not decreased. Therefore, oxidation of the negative terminal 22 can be prevented, and thus the electron donating portion 62 is oxidized instead of the negative terminal 22.

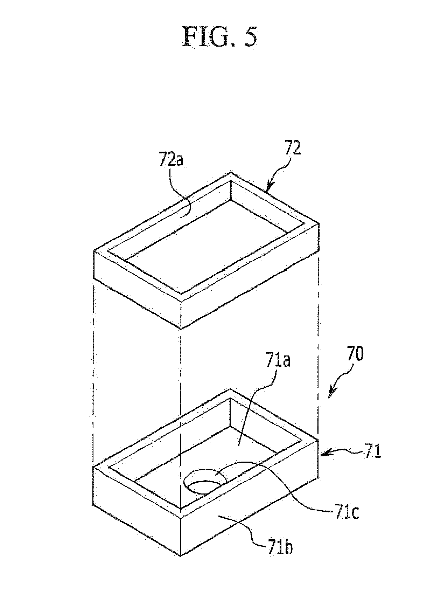

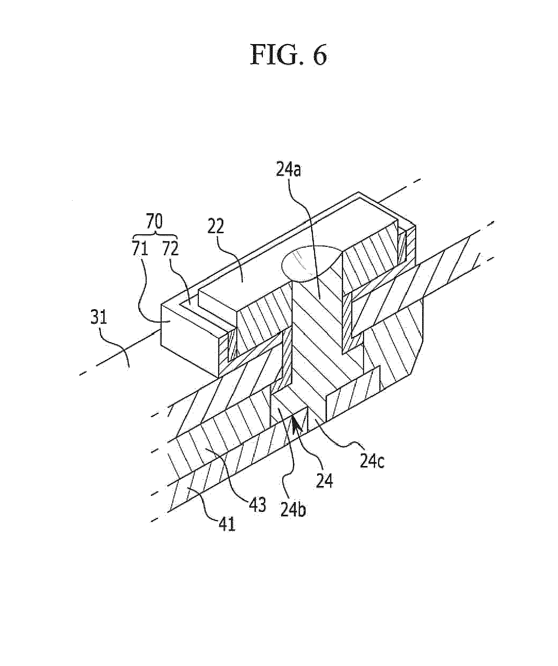

FIG. 5 is an exploded perspective view of a rechargeable battery according to a second exemplary embodiment of the present invention, and FIG. 6 is a cut-away perspective view of a part of the rechargeable battery according to the second exemplary embodiment of the present invention.

Referring to FIG. 5 and FIG. 6, an insulation member 70 is provided between a negative terminal 22 and a cap plate 31 for insulation there between.

The rechargeable battery according to the present exemplary embodiment is the same as the rechargeable battery according to the first exemplary embodiment, excluding a structure of an insulation member 70, and therefore a description for the same structure will not be repeated.

The insulation member 70 includes an insulation portion 71 for insulation between the negative terminal 22 and the cap plate 31 and an electron donating portion 72 contacting the negative terminal 22.

The insulation portion 71 includes a bottom plate 71 a and a side wall 71 b extended to an upper portion from a side end of the bottom plate 71 a. The bottom plate 71a is approximately formed in the shape of a quadrangle plate, and the side wall 71 b is extended to an upper portion from four side ends of the bottom plate 71 a. In the bottom plate 71 a, a hole 71 a to which the terminal connection member 24 is inserted is formed. With such a structure, the insulation portion 71 is formed in the shape of a cuboid having an opened upper portion.

The negative terminal 22 is inserted to the insulation member 70 through the opened upper portion of the insulation member 70 and thus contacts an electron donating portion 72.

As a member providing electrons to the negative terminal 22, the electron donating portion 72 has a cross section of a rectangular ring shape. The electron donating portion 72 is attached to the side wall 71 b of the insulation portion 71 and disposed between the side surface of the negative terminal 22 and the side wall 71 b.

The electron donating portion 72 is formed of a material that is much more oxidizable than the material of the negative terminal 22. For this, the electron donating portion 72 may be formed of a material having few valence electrons than the material of the negative terminal 22 and having more electron shells than the material of the negative terminal 22.

When the negative terminal 22 is formed of aluminum, the electron donating portion 72 may be formed of a material much more oxidizable than the negative terminal 22. The material includes magnesium and sodium.

When the electron donating portion 72 is formed of the material that is much more oxidizable than the material of the negative terminal 22, the electron donating portion 72 provides electrons to the negative terminal 22 to minimize oxidization of the negative terminal 22.

When the cap plate 31 and the case 26 are positively charged, electrons of the negative terminal 22 move to the cap plate 31 so that the negative terminal 22 experiences oxidization. When the negative terminal 22 experiences oxidization, contact resistance between the negative terminal 22 and another member contacting the negative terminal 22 is increased, thereby deteriorating performance of the rechargeable battery.

However, when the insulation member 70 having the electron donating portion 72 is provided as in the present exemplary embodiment, corrosion of the negative terminal 22 can be prevented by providing electrons to the negative terminal 22 such that the electron donating portion 72 is corroded instead of the negative terminal 22.

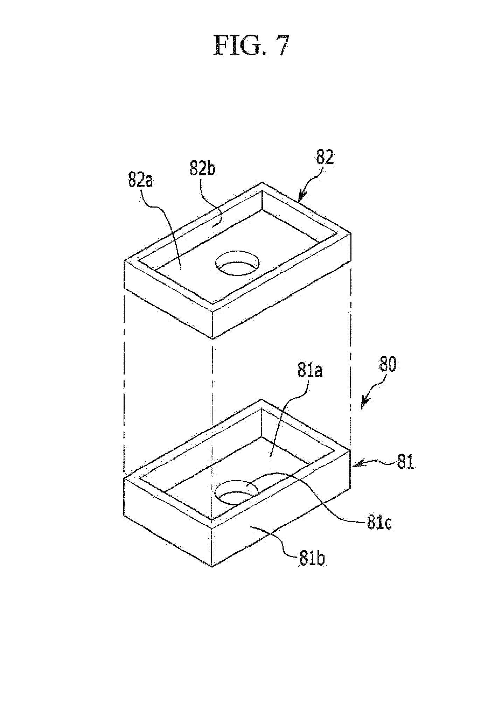

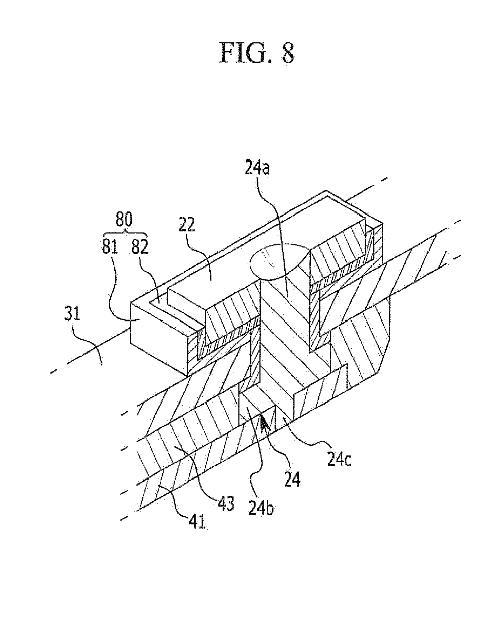

FIG. 7 is an exploded perspective view of an insulation member of a rechargeable battery according to a third exemplary embodiment of the present invention and FIG. 8 is a cut-away perspective view of a part of the rechargeable battery according to the third exemplary embodiment of the present invention.

Referring to FIG. 7 and FIG. 8, an insulation member 80 is provided between a negative terminal 22 and a cap plate 31 for insulation there between. A rechargeable battery according to the present exemplary embodiment is the same as the rechargeable battery according to the first exemplary embodiment, excluding a structure of the insulation member 80, and therefore a description of the same structure will not be repeated.

The insulation member 80 includes an insulation portion 81 for insulation between the negative terminal 22 and the cap plate 31 and an electron donating portion 82 contacting the negative terminal 22.

The insulation plate 81 includes a bottom plate 81a and a side wall 81b extended to an upper portion from a side end of the bottom plate 81 a. The bottom plate 81a is approximately formed in the shape of a quadrangle plate, and the side wall 81b is extended to the upper portion from four side ends of the bottom plate 81 a. In the bottom plate 81 a, a hole 81 c to which the terminal connection member 24 is inserted is formed. With such a structure, the insulation portion is formed in the shape of a cuboid having an opened upper portion.

The negative terminal 22 is inserted to the insulation member 80 through the opened portion of the insulation member 80 and thus contacts the electron donating portion 82.

As a member providing electrons to the negative terminal 22, the electron donating portion 82 includes a lower contact portion 82a and a side contact portion 82b protruding to an upper portion from a side end of the lower contact portion 82a. The lower contact portion 82a is substantially formed in the shape of a quadrangle plate, and the side contact portion 82b is extended to an upper portion from four side ends of the lower contact portion 82a. In the lower contact portion 82a, a hole 82c to which the terminal connection member 24 is inserted is formed.

The electron donating portion 82 is inserted to the insulation portion 81 and thus disposed between the negative terminal 22 and the insulation portion 81, the lower contact portion 82a contacts a bottom side of the negative terminal 22, and the side contact portion 82b contacts a side of the negative terminal 22.

The electron donating portion 82 is formed in the shape of a cuboid having an opened upper portion. The electron donating portion 82 may be formed by coating metal that forms the electron donating portion 82 on the surface of the insulation portion 81.

As described, according to the present exemplary embodiment, the electron donating portion 82 can be simply formed by forming the insulation portion 18 and the coating sacrificial anode metal on an inner surface of the insulation portion 81.

The electron donating portion 82 may be formed of a material that is much more reactive and oxidizable than the material of the negative terminal 22. For this, the electron donating portion 82 may be formed of a material having few valence electrons than the material of the negative terminal 22 and a material having more electron shells than the material of the negative terminal 22.

When the negative terminal 22 is formed of aluminum, the electron donating portion 82 may be formed of a material having higher reactivity than the material of the negative terminal 22, and the terminal includes magnesium.

When the electron donating portion 82 is formed of the material having higher reactivity than the material of the negative terminal 22, the electron donating portion 82 provides electrons to the negative terminal 22 to minimize oxidization of the negative terminal 22.

When the cap plate 31 and the case 26 is positively charged, electrons of the negative terminal 22 move to the cap plate 31 so that the negative terminal 22 is oxidized. When the negative terminal 22 experiences oxidization and corrosion, contact resistance between the negative terminal 22 and another member contacting the negative terminal 22 is increased and thus performance of the rechargeable battery may be deteriorated.

However, when the insulation member 80 having the electron donating portion 82 is provided as in the present exemplary embodiment, the electron donating portion 82 provides electrons to the negative terminal 22 to prevent corrosion of the negative terminal 22 and the electron donating portion 82 is corroded instead of the negative terminal 22.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

| | |
|---|---|
| 101: rechargeable battery | 10: electrode assembly |
| 11: positive electrode | 11 a: positive uncoated region |
| 12: negative electrode | 12a: negative uncoated region |
| 13: separator | 21: positive terminal |
| 22: negative terminal | 23, 24: terminal connection member |
| 24a: column portion | 24b: lower flange |
| 24c: lower protrusion | 26: case |
| 30: cap assembly | 31: cap plate |
| 32: electrolyte injection opening | 34: vent hole |
| 38: seal cap | 39: vent plate |
| 39a: notch | 41, 42: current collecting tab |
| 43, 44: lower insulation member | 55: connection plate |
| 56, 58: gasket | 60, 70, 80: insulation member |
| 61, 71, 81: insulation portion | 61a, 71a, 81a: bottom plate |
| 61 b, 71 b, 81b: side wall | 61 c, 71 c, 81 c, 62a, 82c: hole |
| 62, 72, 82: electron donating portion | 82a: lower contact portion |
| 82b: side contact portion | |

## Claims

1. A rechargeable battery (101) comprising:
an electrode assembly (10) having a first electrode (12) and a second electrode (11).
a case (26) in which the electrode assembly (10) is installed,
a cap plate (31) coupled to the case (26),
a first terminal (22) electrically connected to the first electrode (12) and protruding to the external side of the cap plate (31),
an insulation member (60, 70, 80) having an insulation portion (61, 71, 81) which is arranged between the first terminal (22) and the cap plate (31) and adapted to electrically insulate the first terminal (22) from the cap plate (31),
a second terminal (21) electrically connected to the second electrode (11) and protruding to the external side of the cap plate (31),
**characterized in that**
an electron donating portion (62, 72, 82) is electrically connected to the first terminal (22) and the second terminal (21) is electrically connected to the cap plate (31).

2. The rechargeable battery (101) of claim 1, wherein the electron donating portion (62, 72, 82) is at least partly arranged between the insulation portion (61, 71, 81) and the first terminal (22).

3. The rechargeable battery (101) according to any one of the preceding claims, wherein the first terminal (22) is electrically connected to the first electrode (12) through a first terminal connection member (24) and a first current collecting tab (42) and the second terminal (21) is electrically connected to the second electrode (11) through a second terminal connection member (23) and a second current collecting tab (41), wherein the first terminal connection member (24) directly contacts the first terminal (22) and/or the second terminal connection member (23) directly contacts the second terminal (21).

4. The rechargeable battery (101) according to any one of the preceding claims, wherein electron donating portion (62, 72, 82) directly contacts the first terminal (22).

5. The rechargeable battery (101) according to any one of the preceding claims, wherein an energy to ionize outermost electrons of the material of the electron donating portion (62, 72, 82) is smaller than an energy to ionize outermost electrons of the material of the first terminal (22).

6. The rechargeable battery (101) according to any one of the preceding claims, wherein the first terminal (22) is a negative terminal (22) and the second terminal is a positive terminal (21).

7. The rechargeable battery (101) according to any of claims 4 to 6, wherein a surface area of a lower portion of the first terminal (22) which directly contacts the electron donating portion (62, 82) amounts to at least 10% of a total surface area of a lower portion of the first terminal (22), and/or
wherein a surface area of a side portion of the first terminal (22) which directly contacts the electron donating portion (72) amounts to at least 10% of a total surface area of a side portion of the first terminal (22).

8. The rechargeable battery (101) according to the first alternative of claim 7, wherein a surface area of a lower portion of the first terminal (22) which directly contacts the electron donating portion (62, 82) amounts to at least 70% of a total surface area of a lower portion of the first terminal (22).

9. The rechargeable battery (101) according to the second alternative of claim 7, wherein a surface area of a side portion of the first terminal (22) which directly contacts the electron donating portion (72) amounts to at least 50% of a total surface area of a side portion of the first terminal (22).

10. The rechargeable battery (101) according to any one of the preceding claims, wherein the electron donating portion (62, 72, 82) is formed in the shape of a quadrangle plate and/or wherein the electron donating portion (62, 72, 82) comprises a hole (62a).

11. The rechargeable battery (101) according to any of claims 3 to 10, wherein the insulation portion (61, 71, 81) comprises a bottom plate (61 a, 71 a, 81 a), at least one side wall (61 b, 71 b, 81 b) extending from a peripheral side of the bottom plate (61a, 71a, 81a), and a hole (61c, 71c, 81c) in which the terminal connection member (24) is inserted.

12. The rechargeable battery (101) according to any one of the preceding claims, wherein an outer side portion of the electron donating portion (62, 72, 82) directly contacts an inner side portion (61 b, 71 b, 81 b) of the insulation portion (61, 71, 81).

13. The rechargeable battery (101) according to any one of the preceding claims, wherein the total peripheral side portion of the electron donating portion (62, 72, 82) directly contacts the inner side portion (61 b, 71 b, 81 b) of the insulation portion (61, 71,81).

14. The rechargeable battery (101) according to any one of the preceding claims, wherein the first terminal (22) comprises aluminum and the electron donating portion (62, 72, 82) comprises a material selected from the group of magnesium, potassium, calcium and sodium.

15. The rechargeable battery (101) according to any one of the preceding claims, wherein the first terminal (22) comprises copper and the electron donating portion (62, 72, 82) comprises a material selected from the group of aluminum, zinc, iron, nickel, tin, lead, magnesium, potassium, calcium and sodium.
